# EUROPEAN PATENT APPLICATION

(11) **EP 4 174 575 A1**
(43) Date of publication of application: **03.05.2023**
(21) Application number: 21827986.7
(22) Date of filing: 23.06.2021
(51) Int. Cl.: G03B 21/604, G03B 21/60

(54) **PROJECTION SCREEN CAPABLE OF MAINTAINING POLARIZATION STATE OF PROJECTION LIGHT**

(30) Priority: 24.06.2020 CN 202010587632; 24.06.2020 CN 202021209380 U
(71) Applicant: Shenzhen Photonic Crystal Technology Co., Ltd, Shenzhen, Guangdong 518131 (CN); Shenzhen Time Waying Technology Co., Ltd., Shenzhen, Guangdong 518034 (CN)
(72) Inventor: WANG, Yongjing, Shenzhen, Guangdong 518131 (CN); ZHENG, Gang, Shenzhen, Guangdong 518131 (CN); ZHANG, Xiyu, Shenzhen, Guangdong 518131 (CN); CHOW, Wingyip Kenny, Shenzhen, Guangdong 518034 (CN)
(74) Representative: Argyma
(86) International application number: PCT/CN2021/101842
(87) International publication number: WO 2021/259329

(57) **Abstract**

The present invention discloses a projection screen capable of maintaining a polarization state of projection light redirected to the viewers. It comprises a plurality of optical projection screen units that comprises at least two layers of optical layered structures, wherein the phase changes of the light passing through each optical layered structure are compensated by other layers. The material of each layer of said optical layered structure is optical medium film and/or metal film. In the present invention, the material and thickness of said optical layered structures are designed to have substantially phase compensation, i.e. the phase shifting of the light caused by one optical layer are canceled by the another layer(s) of said optical layered structure, thus the polarization state of emergent light is preserved with the polarization state of incident light. The polarization maintaining ratio may be 200:1 to 2000:1 or more. A typical polarization maintaining ratio is 1000 :1. The said projection screen can be used in 3D movie theater to reduce the ghosting image of 3D movies caused by polarization decay. The viewers have less dizziness. The 3D movie viewing experience is improved.

## Description

### TECHNICAL FIELD

The present invention relates to the field of 3D display technology, in particular to a projection screen maintaining a polarization state of projection light.

### BACKGROUND

3D cinemas have become a mainstream of cinemas in recent years because they provide people with a viewing experience closer to reality. A 3D cinema is typically implemented by using one or two projectors plus polarizer(s) or polarization conversion device(s) to project pictures to be viewed by the left eye and the right eye respectively. The polarization states of the pictures for the left eye and the right eye are different. A screen scatters and reflects light from the projector to the viewers. A viewer wears polarized glasses to distinguish the images for the left eye and for the right eye, so that the left eye only sees the left eye image and the right eye only sees the right eye image. The human brain constantly processes the images for the left and right eyes to produce a stereoscopic effect and generate 3D image.

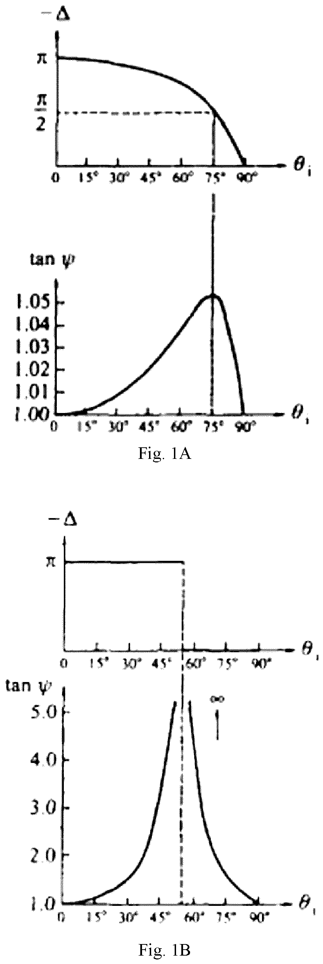

A 3D projection screen is typically a metal screen formed by coating a substrate with a metal reflective layer. The applied materials typically are in the form of metal powder or many tiny metal sheets, which has a certain orientation angular distribution. Therefore the screen redirects the incident light to a certain range of viewing angles. The viewers can see the image at different angles. The polarization state of the reflected light is mostly preserved because of the reflection happened on those tiny metal sheets. However, there always are some depolarization effects when the lights are reflected on any interface. The depolarization effect mainly originates from several different physical mechanisms, as shown in Fig. 1 to Fig. 3 specifically.

The first mechanism is phase depolarization. When the light is reflected on any medium interface, a phase is introduced thereto regardless of the type of the material, transparent optical medium or metal material. The phase of the p-linearly polarized light and the phase of the s-linearly polarized light are added with different phase changes Δ , as shown in Fig. 1A and Fig. 1B. Please note that for the reflection on an optical multilayer medium film, the phase change Δ is a constant π when the refection angle is less than a certain angle. When the reflection is on a metal interface, the phase change Δ is a variable. This variable phase change leads to a change in the polarization state of the incident linearly polarized light, which means that depolarization of the light occurs.

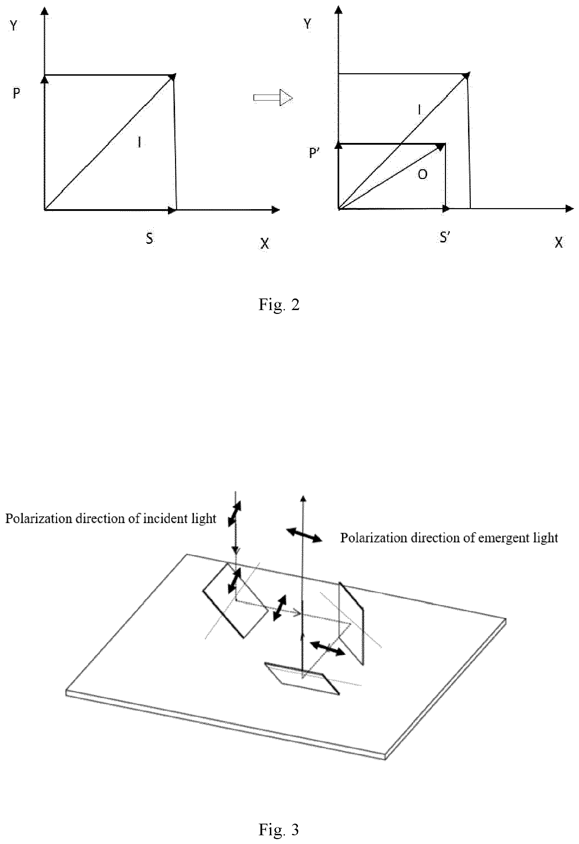

The second depolarization mechanism is reflection amplitude depolarization. When a light beam I is reflected on any surface, the reflectivity for p-linearly polarized light and the reflectivity for s-linearly polarized light are different except for the case of normal incident light. After the p-linearly polarized light and the s-linearly polarized light are reflected, the reflected light O becomes P' and S' as shown in Fig. 2.

Even if there is no phase change of the reflected light, the amplitudes of the p-linearly polarized light and the s-linearly polarized light changed after reflection. P' and S' are eventually combined into the reflected light with a changed polarization state, which means that depolarization occurs.

The third depolarization mechanism is geometric depolarization. Even the polarization state of the light does not change in a local coordinate system, its space polarization vector actually changes in the global coordinate system. The polarization state of reflected light is changed after the light is reflected multiple times. Fig. 3 shows an extreme case, where the polarization state of reflected light is rotated by 90 degrees after the light is reflected three times even every reflection is an ideal reflection without any additional phase change or amplitude change.

Current 3D projection screens have certain depolarization effect on reflected light because of the effect mentioned above, especially in the case of large viewing angles. An image projected for the left eye by a projector has a specific polarization direction, for example left-handed polarized light. When the image is projected onto a 3D projection screen, the majority of the reflected lights are in the state of right-handed circularly polarized light, while a small part of the reflected light becomes left-handed circularly polarized light due to depolarization effect. Therefore the left eye not only sees an image for the left eye, but also sees a small part of an image for the right eye. This effect causes ghosting images on the screen. The viewers feel dizzy and the viewing experience of the 3D cinema is greatly worsened. At present, a typical 3D projection screen has a polarization maintaining ratio of only 100:1, which means that 1% of polarized light of the left eye image changes to another polarization state as a ghost image. The viewer experience is not good. There are a few types of high-end screens where the polarization maintaining ratio is close to 800:1 in the market. But they are very expensive. There is an urgent need in the market for a 3D projection screen capable of maintaining a polarization state of projection light without ghosting. Therefore, 3D projection in the prior art has shortcomings and needs to be improved.

### BRIEF DESCRIPTION OF THE INVENTION

An objective of the present invention is to overcome the shortcomings of the 3D projection screen in the prior art and provide a projection screen capable of maintaining the polarization state of the projection light. The polarization maintaining ratio can reach 200:1 to 2000:1 or more. Ghosting images of 3D movies are greatly reduced. Thus dizziness of viewers can be reduced and 3D movie viewing experience can be improved.

To achieve the above objective, the present invention is implemented by the following technical solutions. The present invention discloses a projection screen capable of maintaining a polarization state of projection light. It comprises a plurality of projection screen units, each of which comprises at least two layers of optical layered structures, wherein a phase change of each optical layered structure is compensated by other layers.

In one embodiment of present patent application, the material of each layer of optical layered structure is configured to include an optical medium film or a metal film.

In another embodiment of present patent application, each optical layered structure is configured to be a multilayer optical medium film.

In another embodiment of present patent application,, each optical layered structure is configured to be a metal film; and reflection angles of the metal films are set to be smaller than 45 degrees.

In another embodiment of present patent application, each layer of optical layered structure is configured to have two layers of films, wherein a first layer of film is configured to be a metal film, a second layer of film is configured to be a fully transparent optical medium film, and the fully transparent optical medium film is disposed above the metal film.

In another embodiment of present patent application, each optical layered structure is provided with two layers of metal films.

In another embodiment of present patent application,, optical axis directions of the layers of optical layered structures are tilted with respect to the normal direction of the corresponding projection screen unit.

In another embodiment of present patent application, the tilting angles of the optical axis directions of the layers of optical layered structures arranged obliquely with respect to the corresponding projection screen unit are between +/-20 degrees and +/-45 degrees.

In another embodiment of present patent application, the specific angular distribution of tilting angles is controlled by means of one or more of laser direct writing, binary optics or diffractive optics, and embossing.

In each technical solution described above, as an example, the nano imprint method is used to form a specific surface contour on a mold by computer control machining to set the tilting angles of surface contour. The optical axis directions of the layers of optical layered structures are arranged obliquely with respect to the normal direction of corresponding projection screen unit.

In one embodiment of the present invention, at least two layers of optical layered structures by provided. By material selection and control of thickness of a medium of each layer of optical layered structure, the phase compensation can be achieved such that the phase and amplitude changes of one layer of optical layered structure can be compensated by the other layer(s) of optical layered structure. The polarization state of emergent light is preserved with the polarization state of incident light. The polarization maintaining ratio may be 200:1 to 2000:1 or more, wherein the typical polarization maintaining ratio is 1000 :1. In this way, ghosting images of 3D movies can be greatly eliminated. Dizziness of viewers can be reduced. 3D movie viewing experience is improved.

### BRIEF DESCRIPTION OF THE DRAWINGS

Fig. 1A is a schematic explanation of depolarization of p-linearly polarized light
Fig. 1B is a schematic explanation of depolarization of s-linearly polarized light
Fig. 2 is a schematic explanation of amplitude depolarization
Fig. 3 is a schematic explanation of geometric depolarization in the prior art.
Fig. 4 is a structural schematic diagram of an embodiment of the projection screen in the present invention.
Fig. 5 is a structural schematic diagram of another embodiment of the projection screen in the present invention.

### DETAILED DESCRIPTION

The present invention is described in detail below in conjunction with the drawings and specific embodiments.

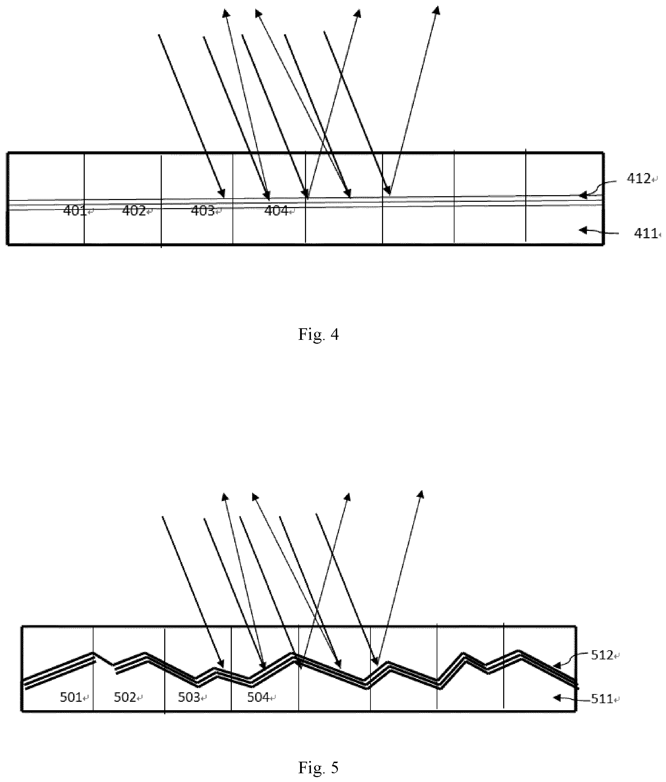

As shown in Fig. 4, the first embodiment of present invention discloses a projection screen capable of maintaining a polarization state of projection light. The projection screen comprises a plurality of projection screen units, denoted by projection screen unit 401, unit 402, unit 403, unit 404, etc.

Furthermore, each said projection screen unit comprises at least two layers of optical layered structures, i.e. each projection screen unit may comprise two layers of optical layered structures, or three layers of optical layered structures, or more layers of optical layered structures. Each of the projection screen units 401, 402, 403, etc. generally comprises the same layers of optical layered structures.

Each layer of optical layered structure is made from optical medium film and/or metal film. In this way, the phase compensation can be achieved by material selection and thickness design of each layer of optical layered structure. The phase and amplitude changes of reflected light from one layer of optical layered structure can be compensated by the other layer(s) of optical layered structure.

The optical medium film in the optical layered structures in each projection screen unit are made from optical medium and/or metal film that have substantial refractive index difference. Therefore a substantial reflection of the light happens between the interfaces of each optical layer. The light from the direction of the projector are reflected back into the eyes of a viewer at certain angular distribution.

In another embodiment of the present invention, each projection screen unit includes at least two layers of optical layered structures that are configured to be a multilayer optical medium film. Because each optical layered structure is configured to be a multilayer optical medium film, the reflected lights have 180 degrees phase change for both p polarized light and s polarized light. The polarization of reflected light does not change when reflection occurs. Furthermore, as the optical layered structure is configured to be a multilayer optical medium film, the multilayer optical medium films are designed to have the same reflectivity for p light and s light during reflection. The reflected light does not change the polarization direction.

For another example, in second embodiment of the present invention, each projection screen unit includes at least two layers of optical layered structures that are configured to be metal film. The reflection angles of the light in the metal films are set to be smaller than 45 degree with the respect of the normal direction of each projection unit. In this way, when reflection occurs, phase changes added by the material for polarized light in different directions are substantial small. Therefore the polarization state of the reflected light is not changed.

In a third embodiment of the present invention shown in Fig. 4, each projection screen unit includes at least two layers of optical layered structures, a first layer of film 411 and a second layer of film 412. Said first layer of film 411 is configured to be a metal film and the second layer of film 412 is configured to be a fully transparent optical medium film. The fully transparent optical medium film 412 is disposed above the metal film 411. When the light is reflected on the fully transparent optical medium film, the phase change of reflection light on the surface of the metal film and a phase change on the transparent medium film cancel with each other to preserve the state of polarization of the reflected light.

Finally, in a fourth embodiment of the present invention, each screen unit comprises at least two layers of optical layered structures. Said optical layered structure comprises two layers of metal films. In this way, phase changes caused by reflection on the two metal surfaces cancel with each other to main polarization. Therefore the polarization state of the reflected light is preserved.

Moreover, in the above embodiments, a certain angular distribution of the reflected light on the projection screen are required to ensure a big viewing angle so that the viewers at different angle can all see the image. The reflection of light by the two or more optical layered structures of each projection screen unit requires some angular distributions.

These angular distributions may be achieved by diffracting and scattering the light to different angles because any diffraction and scattering of said optical layered structures have certain angular distribution. Alternatively, these different angular distributions may also be achieved by using different surface contour and optical axis of the projection screen units.

If the different surface contour shapes and optical axis of the projection screen units are used to control the light distribution, the optical axis directions of the layers of optical layered structures are arranged obliquely with respect to the normal direction of corresponding projection screen unit. The inclination angles and distributions of the optical layered structures are designed according to the viewing angle requirement of the projection screen. Generally an inclination angle between +/-20 degrees and +/-45 degrees is required. For example, as shown in Fig. 5, the orientation of first layer of optical layered structure 511 and the second layer of optical layered structure 512 are respectively arranged obliquely with respect to the corresponding projection screen unit.

The inclination angles are controlled by using laser direct writing, binary optics, diffractive optics and surface embossing to achieve and the specific angular surface distribution.

For example, the laser direct writing method can be used to form surfaces with specific inclinations. The inclination angles of different units are in a certain distribution within a certain cone angle. Therefore the lights coming from one direction are redirected to different directions. The image projected by the projector to the screen has a certain viewing angles. For another example, many small surfaces with a specific inclination angle are formed on a mold first, and then different projection screen units are formed on a flexible basis substrate by using a nano imprint mold.

For another example, the binary optics or diffractive optics method are used to redirect the light to different directions to form a certain distribution of viewing angles. Specific diffraction pattern are manufactured by a mold or optical recording.

For another example, a specific angular surface distribution is manufactured using sand blasting process or a specific corrosion process. First the mold is manufactured by a specific sandblasting process, a specific corrosion process, or a friction process. The contour of mold is transferred to plastic substrate to control the view angle of the projection screen.

Alternatively, a nano imprint method may also be used to form a specific surface shape on a mold by computer control micro machining to increase the projection angle, so that optical axis directions of the optical layered structures may be arranged obliquely with respect to the normal direction of corresponding projection screen unit. The inclination angles and the spatial distribution of each projection screen unit are selected to minimize the geometric depolarization effect for most lights, thereby the polarization of reflected light is preserved.

Using above embodiment of the present invention, the polarization state of reflected light is preserved with the polarization state of incident light. The polarization maintaining ratio is between 200:1 to 2000:1 or more. A typical polarization maintaining ratio is about 1000 :1. In this way, the ghosting image of 3D movies can be greatly eliminated. Dizziness of viewer is reduced and 3D movie viewing experience is improved.

Described above are only preferred embodiments of the present invention, which are not intended to limit the present invention. All modifications, equivalent substitutions and improvements made within the spirit and principle of the present invention should be included within the protection scope of the present invention.

## Claims

1. A projection screen maintaining the polarization state of projection light redirected from the screen, comprising a plurality of projection screen units, the projection screen unit further comprises at least two layers of optical layered structures, wherein the phase change of the first optical layered structure is compensated by the second optical layered structure

2. The projection screen maintaining the polarization state of the projection light redirected from the screen according to claim 1, wherein each layer of optical layered structure is made from optical medium film and/or metal film.

3. The projection screen maintaining the polarization state of the projection light redirected from the screen according to claim 2, wherein each layer of optical layered structure is made from multilayer optical films.

4. The projection screen maintaining the polarization state of the projection light redirected from the screen according to claim 2, wherein each optical layered structure is made from metal film and reflection angles of the metal films are set to be smaller than 45 degrees.

5. The projection screen maintaining the polarization state of the projection light redirected from the screen according to claim 2, wherein each layer of optical layered structure comprises two layers of films; the first layer of film is made from metal, the second layer of film is made from a transparent optical medium film, and the optical medium film is disposed above the metal film.

6. The projection screen maintaining the polarization state of the projection light redirected from the screen according to claim 2, wherein each optical layered structure comprises two layers of different metal films.

7. The projection screen capable of maintaining the polarization state of the projection light according to any one of claims 2-6, wherein optical axis directions of the layers of optical layered structures are tilted with respect to the normal axis of corresponding projection screen unit.

8. The projection screen maintaining the polarization state of the projection light according to claim 7, wherein the tilting angles of the optical axis directions of the layers of optical layered structures are between +/-20 degrees and +/-45 degrees with respect to the axis of corresponding projection screen unit.

9. The projection screen maintaining the polarization state of the projection light according to claim 8, wherein the tilting angles is controlled to a specific angular distribution by one or more of following methods: laser direct writing, binary optics, diffractive optics, and surface embossing.

10. The projection screen maintaining the polarization state of the projection light according to claim 7, wherein the nanoimprint method is used to form a specific surface shape on a mold by computer control machining to increase tilting angles.
